(19) Europäisches Patentamt
European Patent Office
Office européen des brevets

(11) EP 4 769 260 A1

(12) **EUROPEAN PATENT APPLICATION**
published in accordance with Art. 153(4) EPC

(43) Date of publication:
01.07.2026 Bulletin 2026/27

(21) Application number: 23949762.1

(22) Date of filing: 23.08.2023

(51) International Patent Classification (IPC):
*G06Q 10/047* (2023.01)

(52) Cooperative Patent Classification (CPC):
G01C 21/3469; G01C 21/343; G06Q 10/047;
G06Q 10/0631; G06Q 50/40

(86) International application number:
PCT/JP2023/030329

(87) International publication number:
WO 2025/041304 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Mitsubishi Electric Corporation
Tokyo 100-8310 (JP)

(72) Inventors:
• KAWAI, Katsuya
  Tokyo 100-8310 (JP)
• HOSOGI, Yuto
  Tokyo 100-8310 (JP)
• KOJIMA, Takuro
  Tokyo 100-8310 (JP)

(74) Representative: Parker, Andrew James
Meissner Bolte Partnerschaft mbB
Patentanwälte Rechtsanwälte
Postfach 86 06 24
81633 München (DE)

(54) **OPERATION PLANNING DEVICE AND OPERATION MANAGEMENT SYSTEM**

(57) The present invention is an operation planning apparatus setting an operation plan of a vehicle as an electrical automobile in accordance with a movement demand of a user, including: an operation plan prediction part predicting a route and a schedule of traveling of the vehicle in a sequential operation based on an operation condition of the vehicle and an unknown movement demand predicted to occur; a required electrical power amount calculation part calculating a required electrical power amount which should be ensured by the vehicle for the route and the schedule predicted by the operation plan prediction part; and a vehicle appropriation part appropriating the vehicle which can ensure the required electrical power amount for the sequential operation.

FIG. 1

**Description**

TECHNICAL FIELD

The present invention relates to an operation planning apparatus of a vehicle, and particularly to an operation planning apparatus of an electrical automobile used for a demand responsive transport.

BACKGROUND ART

Patent Document 1 discloses a technique of predicting a scheduled travel distance of each electrical vehicle based on an expected demand of allocation of the plurality of electrical vehicles to avoid an unnecessary electrical charge of the electrical vehicle used for a demand responsive transport, calculating a required electrical power amount, and determining a charge schedule and an allocation schedule of each electrical vehicle.

PRIOR ART DOCUMENTS

PATENT DOCUMENT(S)

Patent Document 1: Japanese Patent Application Laid-Open JP 2022 - 96 496 A

SUMMARY

PROBLEM TO BE SOLVED BY THE INVENTION

The technique disclosed in Patent Document 1 has a problem that it is directed to the charge and allocation of the electrical vehicle per unit day and cannot accurately calculate a required electrical power amount per unit operation.
The present invention therefore has been made to solve problems as described above, and it is an object of the present invention to provide an operation planning apparatus capable of accurately calculating a required electrical power amount of an electrical automobile.

MEANS TO SOLVE THE PROBLEM

An operation planning apparatus according to the present invention is an operation planning apparatus setting an operation plan of a vehicle as an electrical automobile in accordance with a movement demand of a user, including: an operation plan prediction part predicting a route and a schedule of traveling of the vehicle in a sequential operation based on an operation condition of the vehicle and an unknown movement demand predicted to occur; a required electrical power amount calculation part calculating a required electrical power amount which should be ensured by the vehicle for the route and the schedule predicted by the operation plan prediction part; and a vehicle appropriation part appropriating the vehicle which can ensure the required electrical power amount for the sequential operation.

EFFECTS OF THE INVENTION

According to the operation planning apparatus of the present invention, the unknown movement demand predicted to occur is allocated to the vehicle on which the operation has not been performed yet, and the required electrical power amount is calculated from the route and the schedule generated based on the operation condition. Thus, the required electrical power amount is accurately calculated, the vehicle which can ensure a sufficient required electrical power amount can be appropriated for the operation, and shortage of the vehicle which can be appropriated and shortage of the electrical power amount halfway through the operation can be avoided.

BRIEF DESCRIPTION OF DRAWINGS

FIG. 1    is a block diagram illustrating a configuration of an operation management system including an operation planning apparatus in an Embodiment 1 according to the present invention.

FIG. 2    is a flow chart explaining processing of vehicle appropriation in the operation planning apparatus in the Embodiment 1 according to the present invention.

FIG. 3    is a flow chart explaining processing of movement demand allocation in an operation planning apparatus in an Embodiment 2 according to the present invention.

FIG. 4    is a diagram illustrating a hardware configuration achieving the operation planning apparatus according to the Embodiments 1 and 2.

FIG. 5    is a diagram illustrating a hardware configuration achieving the operation planning apparatus according to the Embodiments 1 and 2.

DESCRIPTION OF EMBODIMENT(S)

Embodiment 1

System configuration

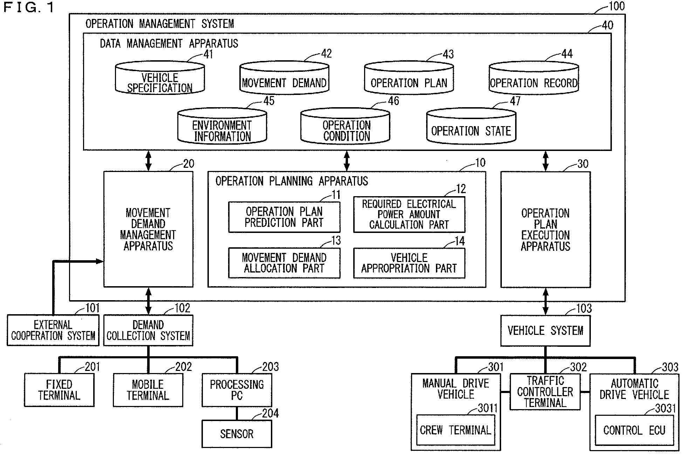

FIG. 1 is a block diagram illustrating a configuration of an operation management system 100 including an operation planning apparatus 10 in an Embodiment 1 according to the present invention. The operation management system 100 is a system achieving a transport service setting an operation plan of a vehicle as an electrical automobile in accordance with a movement demand, and is a system applied to a demand responsive transport.

The operation management system 100 includes the operation planning apparatus 10, a movement demand management apparatus 20, an operation plan execution apparatus 30, and a data management apparatus 40. The operation management system 100 obtains various types of information from an external cooperation system 101, a demand collection system 102, and a vehicle system 103.

The data management apparatus 40 is an apparatus managing data relating to an operation of an electrical automobile, and the managed data includes a vehicle specification 41, a movement demand 42, an operation plan 43, an operation record 44, environment information 45, an operation condition, 46, and an operation state 47.

The vehicle specification 41 is information regarding performance of a vehicle, and is information of the number of owned vehicles, the number of persons transportable by each vehicle, a size of vehicle body, a weight of vehicle body, a charging capacity and a deterioration degree of a battery, a successive travelable distance based on the charging capacity of the battery, for example. The vehicle specification is information registered as information regarding a vehicle owned by a business operator providing an operation service.

The movement demand 42 is information in which a departure position such as a desired boarding stop, a destination such as a desired drop-off stop, the number of persons to be transported, a desired start time, and a desired arrival time, for example, and is collected via the demand collection system 102.

The operation plan 43 is information regarding a plan of an operation and a schedule of an operation of a vehicle, and includes appropriation information of a vehicle for each operation, allocation information of a movement demand, and a route and a schedule determined in accordance with an operation condition and a movement demand. Herein, the appropriation information of the vehicle is an identification number of a vehicle used for each operation, and when a first vehicle is used for a first service, an identification number of a vehicle for the first service is 1.

The allocation information of the movement demand is an identification number of a movement demand allocated to each operation. For example, in a case where the number of persons to be transported is six and identification numbers of 1 to 6 are allocated thereto as each individual movement demand, when a first service is used for first and second persons, a second service is used for third and fourth persons, and a third service is used for fifth and sixth persons, identification numbers of the movement demand for the first service is 1 and 2. In a line-based operation in which an operation is performed along a predetermined line, information regarding necessity of traveling via each stop determined in consideration of the movement demand for each stop along the line can be included.

The operation record 44 is information storing contents of a past operation, and includes information associated with a past operation such as a movement demand, an operation condition, a vehicle specification, and environment information.

The environment information 45 is information regarding an external environment of an area where an electrical automobile travels and stops, and includes static information such as a connection relationship of a road, the number of traffic lanes, a gradient, a curvature, and a limiting speed and dynamic information such an external temperature, a direction of wind, and a wind speed in the area. The static information is information measured and registered by a business operator providing an operation service regarding an operation area, and the dynamic information is information obtained from a weather information company providing weather information and updated from hour to hour.

The operation condition 46 is information regarding a condition in generating an actual operation plan, and includes information such as the number of persons transportable by an electrical automobile used for the operation. In a line-based operation, information regarding an order of stops at which a vehicle stops, a travel time between stops, a stopping time for each stop, a condition of skipping a stop, and a start time of each operation, for example, can be included. In an individual-transport operation with no predetermined line such as a taxi, information regarding a range of an area to which a reservation is allocated and an average travel speed, for example, can be included.

The operation state 47 is information regarding a state of an operation which is currently performed, and includes a position of a vehicle, a vehicle state where a vehicle is traveling or stopping, and an operation state where a passenger is getting on and out of a vehicle, a vehicle is actually traveling, and a vehicle which is traveling is out-of-service (deadhead), for example. In the line-based operation, information regarding a proceeding degree of operation and a delay state, for example, can be included.

The operation planning apparatus 10 is an apparatus generating an operation plan in consideration of a movement demand and an operation state based on data from the data management apparatus 40, and includes an operation plan prediction part 11, a required electrical power amount calculation part 12, a movement demand allocation part 13, and a vehicle appropriation part 14.

The operation plan prediction part 11 predicts a route and a schedule of traveling of a vehicle in a sequential operation including a deadhead vehicle for the operation condition setting and the movement demand. For example, in a line-based operation, the route and the schedule are predicted based on an operation condition setting such as whether to perform processing of "skipping when there is no getting on/out movement demand" and whether to advance a subsequent schedule when skipping is performed regarding a certain stop. In an individual-transport operation, a route and a schedule are changed to sequentially correspond to all of unknown movement demands.

The required electrical power amount calculation part 12 calculates a required electrical power amount which a vehicle needs to ensure for the route and the schedule of the sequential operation.

The movement demand allocation part 13 allocates a movement demand appropriate for transport in the sequential operation, and the vehicle appropriation part 14 appropriates a vehicle which can ensure a required electrical power amount at the operation.

The movement demand management apparatus 20 stores the movement demand received from the demand collection system 102 in the data management apparatus 40, and distributes a reservation result to the demand collection system 102. The movement demand is estimated or predicted from information from an external system and an operation record. The movement demand is estimated and predicted by extracting usage information of the other transport system and commercial facilities, for example, and an operation record having a close condition such as a weather from the data management apparatus 40 and calculating an average value, for example.

The operation plan execution apparatus 30 transmits instruction of operation to the vehicle system 103 based on the operation plan obtained from the data management apparatus 40, collects the operation state from the vehicle system 103, and stores the operation state in the data management apparatus 40.

The external cooperation system 101 receives usage information of the other transport system and commercial facilities from an external system not shown in the diagrams via communication network, for example, and provides the usage information as information for estimating or predicting the movement demand to the operation management system 100.

The demand collection system 102 collects a movement demand from a traveling customer, transmits the movement demand to the operation management system 100, and proposes a reservation result received from the operation management system 100 to the traveling customer. Examples of the demand collection system 102 can include a fixed terminal 201, a mobile terminal 202, a processing personal computer (PC) 203. and a sensor 204.

The fixed terminal 201 is disposed in a fixed position such as a stop in a line-based operation to provide information browsing and a means of reservation to the traveling customer. Accordingly, the traveling customer can use service without preparing the mobile terminal.

The mobile terminal 202 is owned and carried by a traveling customer to provide information browsing and a means of reservation to the traveling customer. Accordingly, service can be used at an optional position and timing.

The processing PC 203 converts information of detecting a traveling customer by the sensor 204 such as a camera or a light detection and ranging (LiDAR) disposed in various positions into a movement demand. Accordingly, the traveling customer can use service without explicitly making a reservation.

The vehicle system 103 is mounted to a vehicle, travels and stops in accordance with an instruction from the operation management system 100, and transports a traveling customer.

When the operation vehicle is a manual drive vehicle 301, the instruction from the operation management system 100 is proposed to a crew via a crew terminal 3011 carried by the crew. Accordingly, transport service by manual driving can be provided.

When the operation vehicle is an automatic drive vehicle 303, an instruction from the operation management system 100 is supplied to a control electronic control unit (ECU), and traveling and stopping of the vehicle is automatically controlled by control of the control ECU. Accordingly, transport service by automatic driving can be provided.

When the instruction from the operation management system 100 is proposed to a traffic controller terminal 302 and is proposed to a traffic controller controlling a motion of a vehicle such as the manual drive vehicle 301 and the automatic drive vehicle 303, the traffic controller controls the vehicle. The vehicle travels and stops in accordance with the instruction from the traffic controller. Accordingly, smooth transport service ensuring safety can be provided by the vehicle controller by the traffic controller.

Although the operation plan prediction part 11 of the operation planning apparatus 10 predicts the movement demand and predicts the route and the schedule of traveling of the vehicle, an individual movement demand needs not be specifically predicted. Statistical values such as an expected value or variance at which the movement demand to be allocated to the operation occurs can be used. For example, when a probability of occurrence of the movement demand of movement from an A position to a B position once in a certain time period is equal to or larger than a predetermined threshold value, a required electrical power amount is calculated in accordance with a route and a schedule in a case of allocating the movement demand.

Motion

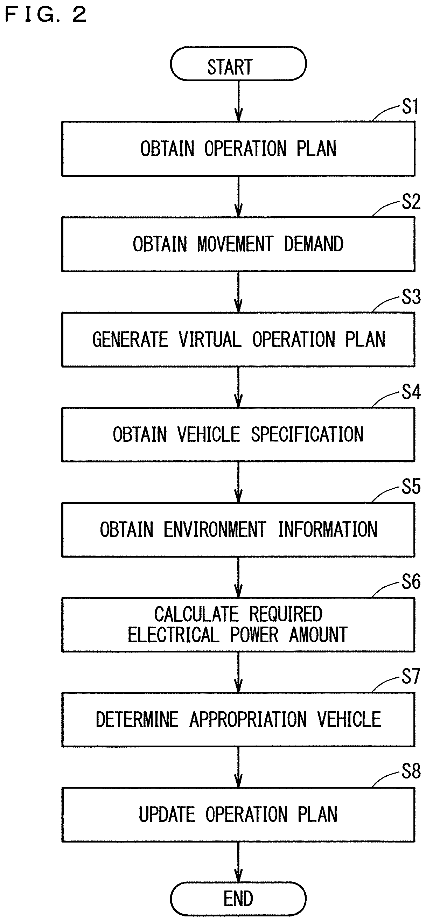

Next, a flow of processing in appropriating a vehicle in the operation planning apparatus 10 is described using a flow chart illustrated in FIG. 2. The operation planning apparatus 10 starts processing at a timing of appropriating a vehicle to an operation which has not been performed yet, and the operation plan prediction part 11 obtains the operation plan 43 in an initial state for the operation from the data management apparatus 40 (Step S1). In a line-based operation, an operation plan of traveling along all of stops, for example, is applied at this time, for example. In an individual-transport operation, an operation plan constituting a route and schedule sequentially corresponding to the movement demand which has been already allocated at this time is applied.

Next, the operation plan prediction part 11 obtains the unknown movement demand 42 predicted to occur from the data management apparatus 40 (Step S2), and extracts the movement demand matching the allocation condition of the operation.

Next, the operation plan prediction part 11 generates a virtual operation plan in a case of allocating the unknown movement demand to the operation plan in the initial state (Step S3). In a line-based operation, necessity of traveling along each stop is determined after all of the unknown movement demands are allocated, and a route and a schedule are changed when there is a stop to be skipped.

The skipping is processing of allocating a demand of "going from A to B" when there is such a demand but not stopping a vehicle at a stop where nobody gets on and out of the vehicle. For example, when stops 1 to 2, stops 1 to 4, and stops 2 to 5 are allocated as the movement demand in a line of sequentially traveling along the stops 1, 2, 3, 4, and 5, there is no movement demand of getting on or out of a vehicle at the stop 3. Thus, a route sequentially traveling along the stops 1, 2, 4, and 5 is applied, and the vehicle does not stop at the stop 3.

Considered as a route in a case of not stopping at a stop are a pattern of passing in front of a stop to be skipped and a pattern of taking a shortcut instead of passing in front of a stop to be skipped. Such a route is defined as "a route in a case of skipping this stop".

Since the route and the schedule are predicted in consideration of skipping, a required electrical power amount can be calculated more accurately, and an appropriate vehicle can be appropriated.

In an individual-transport operation, a route and a schedule are reorganized to sequentially correspond to all of unknown movement demands. For example, when positions A to D and positions C to B are allocated as the movement demands for the positions A, B, C, and D to which an order relationship is not set, a route of traveling along the positions A, D, C, and D in this order is applied.

Since the route and the schedule are reorganized to sequentially correspond to all of the unknown movement demands in this manner, the required electrical power amount can be calculated more accurately, and the appropriate vehicle can be appropriated.

Herein, when the unknown movement demand is not a specific prediction of an individual movement demand but is supplied as a statistical value such as an expected value or variance at which the movement demand to be allocated to the operation occurs, a route and a schedule which may occur with a constant probability or more are applied as a plurality of patterns as a virtual operation plan. A largest value in values calculated from the plurality of patterns is used as the required electrical power amount.

For example, in a line sequentially passing the stops 1, 2, 3, 4, and 5, when a probability of occurrence of movement demands from the stops 1 to 2, the stops 1 to 4, and the stops 2 to 5 is equal to or larger than a predetermined threshold value, a route and a schedule of sequentially passing along the stops 1, 2, 4, and 5 are applied, and when a probability of occurrence of movement demands from the stops 1 to 3, the stops 1 to 4, and the stops 3 to 5 is equal to a predetermined threshold value, a route and a schedule of sequentially passing along the stops 1, 3, 4, and 5 are applied, each required electrical power amount is calculated, and a vehicle to be appropriated is determined based on a larger required electrical power amount.

Next, the required electrical power amount calculation part 12 obtains the vehicle specification 41 of a plurality of vehicle as candidates of appropriation to the virtual operation plan generated in the operation plan prediction part 11 from the data management apparatus 40 (Step S4).

Next, the required electrical power amount calculation part 12 obtains the environment information 45 along the virtual operation plan generated in the operation plan prediction part 11 from the data management apparatus 40 (Step S5).

Next, the required electrical power amount calculation part 12 calculates a required electrical power amount in a case of appropriating each vehicle to the virtual operation plan (Step S6).

When calculation is performed by analytic approach (method) of calculating the required electrical power amount from travel resistance on a vehicle, a transport weight is calculated from the number of traveling customers, sex and age thereof, and a luggage amount and is added to a vehicle weight in calculating resistance on the vehicle. The travel resistance on the vehicle in analytic approach is calculated using the following expression, for example.

Rolling resistance = coefficient $\times$ vehicle weight [kg] $\times$ gravitational acceleration [$9.8\ \mathrm{m/s^2}$]

$$\text{Air resistance} = \text{coefficient} \times \text{frontal projected area } [\mathrm{m^2}] \times \text{travel speed } [\mathrm{m/s}]^2$$

Gradient resistance = vehicle weight [kg] $\times$ gravitational acceleration [$9.8\ \mathrm{m/s^2}$] $\times$ sin (gradient [°])

Acceleration resistance = acceleration [$\mathrm{m/s^2}$] $\times$ (vehicle weight [kg] + equivalent inertial weight [kg])]

Since an electrical power consumption amount [Ws] per unit second is obtained by a sum of four types of resistance described above, the required electrical power amount can be calculated by multiplying a travel time in a virtual operation plan by the electrical power consumption amount per unit second. Since standby electrical power, for example, consumption electrical power of an air conditioning apparatus, and consumption electrical power of an electrical apparatus for driving and controlling a vehicle occurs proportionally to elapsed time during traveling and stopping, they are also added to the required electrical power consumption.

Since the required electrical power amount is calculated in consideration of the transport weight in this manner, the required electrical power amount can be calculated more accurately, and the appropriate vehicle can be appropriated.

When the required electrical power amount is calculated by statistical approach of calculating the required electrical power amount from a past operation record, only an operation record with close number of traveling customers, sex and age thereof, and luggage amount and is extracted to refer to the required electrical power amount.

Also applicable in the statistical approach is a method of machine learning by artificial intelligence (AI) inputting data of an operation record and outputting a required electrical power amount.

The vehicle appropriation part 14 determines a vehicle which can ensure the required electrical power amount for the virtual operation plan as a vehicle appropriated to the operation (Step S7). When there are a plurality of vehicles matching a condition, a vehicle requiring a smallest electrical power amount is selected with a constant margin, for example.

That is to say, a vehicle with a smallest available electrical power amount is selected from vehicles with an available electrical power amount larger than "required electrical power amount + margin" in vehicles owned by the business operator at a start of operation from the vehicle specification 41.

It is also applicable that sequential processing of Steps S1 to S7 described above is performed in increasing order of an electrical power amount of a vehicle, and once a vehicle matching a condition is found, the vehicle is selected and the processing is finished.

The vehicle appropriation part 14 registers information of the vehicle determined to be allocated in the operation plan 43 of the data management apparatus 40, and updates the operation plan 43 (Step S8).

Although described above is the procedure of generating the operation plan from the movement demand and the operation condition and calculating the required electrical power amount from the operation plan, the vehicle specification, and the environment information, the required electrical power amount can also be directly calculated from the movement demand, the operation condition, the vehicle specification, and the environment information by machine learning.

That is to say, large amount of combinations of the movement demand, the operation condition, the vehicle specification, and the environment information with the required electrical power amount are stored as the data of the operation record, and a mathematical expression of calculating the required electrical power amount from the movement demand, the operation condition, the vehicle specification, and the environment information is outputted by machine learning to calculate the required electrical power amount using the mathematical expression.

When the required electrical power amount is directly calculated from various types of information by the machine learning using AI, the required electrical power amount can be calculated more accurately, and an appropriate vehicle can be appropriated.

Effect

As described above, in the operation planning apparatus 10 according to the Embodiment 1, the predicted unknown movement demand is allocated to the vehicle on which the operation has not been performed yet, and the required electrical power amount is accurately calculated from the route and the schedule generated based on the operation condition.

Thus, the vehicle which can ensure a sufficient required electrical power amount can be appropriated for the operation, and shortage of the vehicle which can be appropriated and shortage of the electrical power amount halfway through the operation can be avoided. Since the operation management system 100 includes such an operation planning apparatus 10, achievable is the operation management avoiding shortage of the vehicle which can be appropriated and shortage of the electrical power amount halfway through the operation.

Embodiment 2

The operation planning apparatus 10 according to the Embodiment 1 in the present invention described above allocates the predicted unknown movement demand to the service on which the operation has not been performed yet and generates the route and the schedule. In contrast, the operation planning apparatus 10 according to the Embodiment 2 allocates the movement demand inputted halfway through the operation and generates the route and the schedule.

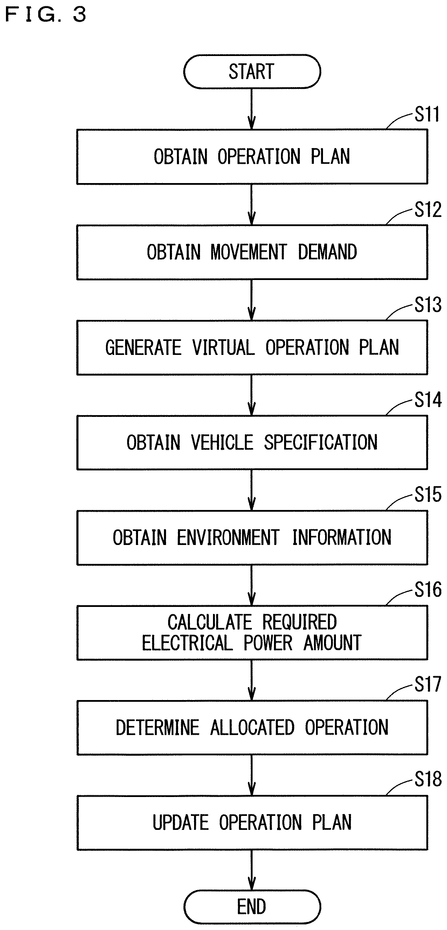

Described using a flow chart illustrated in FIG. 3 is a flow of processing in allocating the movement demand in the operation planning apparatus 10 according to the Embodiment 2, that is to say, in inputting a new movement demand from the demand collection system 102 to the operation management system 100 and starting determination of allocation of the movement demand. A configuration of the operation planning apparatus 10 is the same as that of the operation planning apparatus 10 according to the Embodiment 1 illustrated in FIG. 1, thus is described with reference to FIG. 1.

The operation planning apparatus 10 according to the Embodiment 2 starts processing at a timing of inputting the movement demand which has newly occurred, and the operation plan prediction part 11 obtains the remaining operation plan 43 for each operation which is currently performed from the data management apparatus 40 (Step S11).

The operation plan prediction part 11 obtains the movement demand which has newly occurred from the data management apparatus 40 (Step S12), and proceeds to subsequent processing for the operation matching the allocation condition.

Next, the operation plan prediction part 11 generates a virtual operation plan in a case of allocating the movement demand which has newly occurred to the remaining operation plan (Step S13). In a line-based operation, necessity of traveling along subsequent stops is determined after the movement demand which has newly occurred is allocated, and a route and a schedule are changed when there is a stop to be skipped. In an individual-transport operation, the movement demand which has newly occurred is added to the movement demand which has been already allocated, and a route and a schedule are reorganized to sequentially correspond to all of the movement demands.

Next, the required electrical power amount calculation part 12 obtains the vehicle specification 41 of a vehicle appropriated to each operation plan from the data management apparatus 40 (Step S14).

Next, the required electrical power amount calculation part 12 obtains the environment information 45 along the remaining virtual operation plan which has been generated from the data management apparatus 40 (Step S15).

Next, the required electrical power amount calculation part 12 calculates a required electrical power amount in a case of allocating the movement demand which has newly occur to each operation (Step S16). The method described in the Embodiment 1 can be adopted to a method of calculating the required electrical power amount.

The movement demand allocation part 13 determines an operation in which the required electrical power amount can be ensured by a current vehicle, that is to say, an operation in which electrical power larger than the required electrical power amount can be ensured as an operation to which the movement demand which has newly occurred is allocated.

When there are a plurality of operations matching the condition, an earliest operation is selected in a line-based operation, and selected is an operation having smallest increase of the required electrical power amount caused by allocating the movement demand which has newly occurred in an individual-transport operation, for example.

It is also applicable that the sequential processing of Steps S11 to S17 described above is performed in decreasing order of priority, and once an operation matching a condition is found, the vehicle is selected and the processing is performed. That is to say, calculation is performed in decreasing order of priority on a service having an early operation time, and once a service matching a condition is found, the processing is finished at that time.

The movement demand allocation part 13 allocates the movement demand which has newly occurred to the selected operation, and updates the operation plan of the data management apparatus 40.

Effect

As described above, in the operation planning apparatus 10 according to the Embodiment 2, in a case of allocating a movement demand which has newly occurred to a remaining operation which is being performed, a required electrical power amount is accurately calculated from a route and a schedule generated with reference to an operation condition, and when shortage of the electrical power amount occurs, the movement demand which has newly occurred is not allocated.

Thus, shortage of the electrical power amount halfway through the operation can be avoided while dealing with the movement demand as much as possible. Since the operation management system 100 includes such an operation planning apparatus 10, achievable is the operation management avoiding shortage of the electrical power amount halfway through the operation while dealing with the movement demand as much as possible.

Hardware configuration

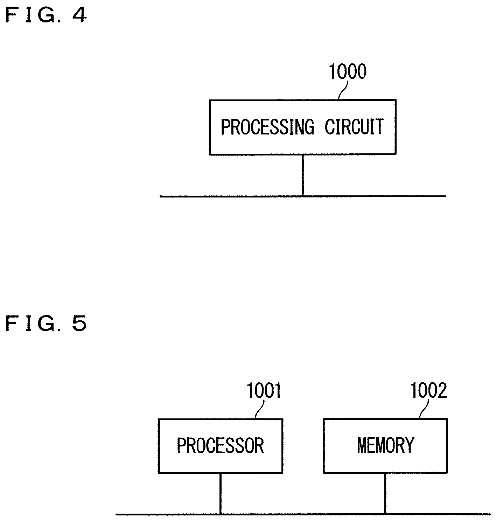

Each constituent element of the operation planning apparatus 10 according to the embodiments 1 to 2 described above can be made up using a computer, and is achieved when the computer executes a program. That is to say, each constituent element is achieved by a processing circuit 1000 illustrated in FIG. 4, for example. A processor such as a central processing unit (CPU) and a digital signal processor (DSP) is applied to the processing circuit 1000, and the function of each part is achieved by executing the program stored in a storage device.

Dedicated hardware may be applied to the processing circuit 1000. When the processing circuit 1000 is the dedicated hardware, a single circuit, a complex circuit, a programmed processor, a parallel-programmed processor, an application specific integrated circuit (ASIC), a field-programmable gate array (FPGA), or a combination of them, for example, falls under the processing circuit 1000.

In the operation planning apparatus 10, each of the functions of the constituent elements can be achieved by an individual processing circuit, and these functions can also be collectively achieved by one processing circuit.

FIG. 5 illustrates a hardware configuration in a case where the processing circuit 1000 is made up using a processor. In this case, the function of each part of the operation planning apparatus 10 is achieved by a combination with software etc. (software, firmware, or software and firmware). The software etc. is described as a program and is stored in a memory 1002. A processor 1001 functioning as the processing circuit 1000 reads out and executes a program stored in the memory 1002 (storage apparatus), thereby achieving the function of each part. That is to say, this program is deemed to make a computer execute a procedure and a method of the constituent elements of the operation planning apparatus 10.

Herein, the memory 1002 may be a non-volatile or volatile semiconductor memory such as a RAM, a ROM, a flash memory, an erasable programmable read only memory (EPROM), or an electrically erasable programmable read only memory (EEPROM), a hard disk drive (HDD), a magnetic disc, a flexible disc, an optical disc, a compact disc, a mini disk, a Digital Versatile Disc (DVD), and a drive apparatus thereof, or any storage medium which is to be used in the future.

Described above is the configuration that the function of each constituent element of the operation planning apparatus 10 is achieved by one of the hardware and the software, for example. However, the configuration is not limited thereto, but also applicable is a configuration of achieving some constituent elements of the operation planning apparatus 10 by dedicated hardware, and achieving the other some constituent elements by software, for example. For example, functions of some constituent elements can be achieved by the processing circuit 1000 as the dedicated hardware and functions of the other some constituent elements can be achieved by the processing circuit 1000 as the processor 1001 reading out and executing the program stored in the memory 1002.

As described above, the operation planning apparatus 10 can achieve each function described above by the hardware, the software, or the combination of them, for example.

Although the present invention is described in detail, the foregoing description is in all aspects illustrative and does not restrict the present invention. It is therefore understood that numerous modification examples can be devised without departing from the scope of the present invention.

In the present invention, each embodiment can be arbitrarily combined, or each embodiment can be appropriately varied or omitted within the scope of the invention.

**Claims**

1. An operation planning apparatus setting an operation plan of a vehicle as an electrical automobile in accordance with a movement demand of a user, comprising:

an operation plan prediction part predicting a route and a schedule of traveling of the vehicle in a sequential operation based on an operation condition of the vehicle and an unknown movement demand predicted to occur; a required electrical power amount calculation part calculating a required electrical power amount which should be ensured by the vehicle for the route and the schedule predicted by the operation plan prediction part; and a vehicle appropriation part appropriating the vehicle which can ensure the required electrical power amount for the sequential operation.

2. The operation planning apparatus according to claim 1,

   further comprising
   a movement demand allocation part determining whether a new movement demand is allocated to the sequential operation when the new movement demand occurs while the sequential operation is performed, wherein the operation plan prediction part generates a virtual operation plan in a case of allocating the new movement demand to a remaining operation plan of the sequential operation which is being performed, the required electrical power amount calculation part calculates a new required electrical power amount in a case of allocating the new movement demand to the remaining operation plan of the sequential operation, and the movement demand allocation part determines an operation in which the new required electrical power amount can be ensured by the sequential operation as an operation to which the new movement demand is allocated.

3. The operation planning apparatus according to claim 1 or 2,
   wherein the operation plan prediction part predicts the route and the schedule in consideration of skipping of a stop in accordance with the unknown movement demand in a line-based operation of operating the vehicle along a predetermined line.

4. The operation planning apparatus according to claim 1 or 2,
   wherein the operation plan prediction part predicts a route and a schedule to sequentially correspond to all of unknown movement demands in an individual-transport operation of operating the vehicle without a predetermined line.

5. The operation planning apparatus according to claim 1 or 2,
   wherein the required electrical power amount calculation part calculates the require electrical power amount by adding a transport weight for the unknown movement demands to a vehicle weight used when calculating resistance on the vehicle.

6. The operation planning apparatus according to claim 1 or 2,
   wherein the required electrical power amount calculation part calculates the required electrical power amount by machine learning using artificial intelligence.

7. An operation management system setting an operation plan of a vehicle as an electrical automobile in accordance with a movement demand of a user, comprising:

   the operation planning apparatus according to claim 1 or 2;
   a data management apparatus managing data relating to an operation of the electrical automobile;
   a movement demand management apparatus storing the movement demand received from an external system in the data management apparatus; and
   an operation plan execution apparatus transmitting instruction of operation on the vehicle based on the operation plan set in the operation planning apparatus, collecting an operation state from the vehicle, and storing the operation state in the data management apparatus.

FIG. 1

**OPERATION MANAGEMENT SYSTEM** /100

**DATA MANAGEMENT APPARATUS** /40

| VEHICLE SPECIFICATION /41 | MOVEMENT DEMAND /42 | OPERATION PLAN /43 | OPERATION RECORD /44 |

| ENVIRONMENT INFORMATION /45 | OPERATION CONDITION /46 | OPERATION STATE /47 |

**MOVEMENT DEMAND MANAGEMENT APPARATUS** /20

**OPERATION PLANNING APPARATUS** /10

| OPERATION PLAN PREDICTION PART /11 | REQUIRED ELECTRICAL POWER AMOUNT CALCULATION PART /12 |
| MOVEMENT DEMAND ALLOCATION PART /13 | VEHICLE APPROPRIATION PART /14 |

**OPERATION PLAN EXECUTION APPARATUS** /30

EXTERNAL COOPERATION SYSTEM /101

DEMAND COLLECTION SYSTEM /102

VEHICLE SYSTEM /103

| FIXED TERMINAL /201 | MOBILE TERMINAL /202 | PROCESSING PC /203 |

SENSOR /204

| MANUAL DRIVE VEHICLE /301 | TRAFFIC CONTROLLER TERMINAL /302 | AUTOMATIC DRIVE VEHICLE /303 |

CREW TERMINAL /3011

CONTROL ECU /3031

10

FIG. 2

```
                    ┌───────────┐
                    │   START   │
                    └─────┬─────┘
                          │
                          ▼                          S1
      ┌──────────────────────────────────────────┐
      │          OBTAIN OPERATION PLAN            │
      └─────────────────────┬────────────────────┘
                            │
                            ▼                        S2
      ┌──────────────────────────────────────────┐
      │          OBTAIN MOVEMENT DEMAND           │
      └─────────────────────┬────────────────────┘
                            │
                            ▼                        S3
      ┌──────────────────────────────────────────┐
      │       GENERATE VIRTUAL OPERATION PLAN     │
      └─────────────────────┬────────────────────┘
                            │
                            ▼                        S4
      ┌──────────────────────────────────────────┐
      │          OBTAIN VEHICLE SPECIFICATION     │
      └─────────────────────┬────────────────────┘
                            │
                            ▼                        S5
      ┌──────────────────────────────────────────┐
      │        OBTAIN ENVIRONMENT INFORMATION     │
      └─────────────────────┬────────────────────┘
                            │
                            ▼                        S6
      ┌──────────────────────────────────────────┐
      │           CALCULATE REQUIRED             │
      │        ELECTRICAL POWER AMOUNT           │
      └─────────────────────┬────────────────────┘
                            │
                            ▼                        S7
      ┌──────────────────────────────────────────┐
      │       DETERMINE APPROPRIATION VEHICLE     │
      └─────────────────────┬────────────────────┘
                            │
                            ▼                        S8
      ┌──────────────────────────────────────────┐
      │           UPDATE OPERATION PLAN           │
      └─────────────────────┬────────────────────┘
                            │
                            ▼
                    ┌───────────┐
                    │    END    │
                    └───────────┘
```

FIG. 3

```
          ┌──────────┐
          │  START   │
          └────┬─────┘
               │                      ┌─ S11
   ┌───────────▼──────────────┐
   │   OBTAIN  OPERATION  PLAN │
   └───────────┬──────────────┘
               │                      ┌─ S12
   ┌───────────▼──────────────┐
   │  OBTAIN  MOVEMENT  DEMAND │
   └───────────┬──────────────┘
               │                      ┌─ S13
   ┌───────────▼──────────────┐
   │ GENERATE VIRTUAL         │
   │        OPERATION  PLAN   │
   └───────────┬──────────────┘
               │                      ┌─ S14
   ┌───────────▼──────────────┐
   │ OBTAIN VEHICLE SPECIFICATION │
   └───────────┬──────────────┘
               │                      ┌─ S15
   ┌───────────▼──────────────┐
   │ OBTAIN ENVIRONMENT INFORMATION │
   └───────────┬──────────────┘
               │                      ┌─ S16
   ┌───────────▼──────────────┐
   │ CALCULATE REQUIRED       │
   │ ELECTRICAL POWER AMOUNT  │
   └───────────┬──────────────┘
               │                      ┌─ S17
   ┌───────────▼──────────────┐
   │ DETERMINE ALLOCATED OPERATION │
   └───────────┬──────────────┘
               │                      ┌─ S18
   ┌───────────▼──────────────┐
   │   UPDATE  OPERATION  PLAN │
   └───────────┬──────────────┘
               │
          ┌────▼─────┐
          │   END    │
          └──────────┘
```

F I G. 4

1000

PROCESSING CIRCUIT

F I G. 5

1001                    1002

PROCESSOR              MEMORY

## INTERNATIONAL SEARCH REPORT

| International application No. |
|---|
| **PCT/JP2023/030329** |

### A. CLASSIFICATION OF SUBJECT MATTER

*G06Q 10/047*(2023.01)i
FI:  G06Q10/047

According to International Patent Classification (IPC) or to both national classification and IPC

### B. FIELDS SEARCHED

Minimum documentation searched (classification system followed by classification symbols)

G06Q10/047

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2022-96496 A (TOYOTA JIDOSHA KABUSHIKI KAISHA) 29 June 2022 (2022-06-29)<br>entire text | 1-7 |
| A | WO 2014/073412 A1 (MITSUBISHI ELECTRIC CORPORATION) 15 May 2014 (2014-05-15)<br>entire text | 1-7 |
| A | JP 2021-129459 A (MITSUBISHI ELECTRIC CORPORATION) 02 September 2021 (2021-09-02)<br>entire text | 1-7 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 October 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/030329**

| Patent document cited in search report | | | Publication date (day/month/year) | Patent family member(s) | | | Publication date (day/month/year) |
|---|---|---|---|---|---|---|---|
| JP | 2022-96496 | A | 29 June 2022 | (Family: none) | | | |
| WO | 2014/073412 | A1 | 15 May 2014 | US | 2015/0262101 | A1 | |
| | | | | CN | 104768831 | A | |
| JP | 2021-129459 | A | 02 September 2021 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022096496 A